# EUROPEAN PATENT APPLICATION

(11) **EP 2 541 965 A2**
(43) Date of publication of application: **02.01.2013**
(21) Application number: 12005115.6
(22) Date of filing: 08.12.2010
(51) Int. Cl.: H04N 21/482

(54) **Program-information displaying device, program-information displaying method, program, and recording medium**

(30) Priority: 17.12.2009 JP 2009286069; 17.12.2009 JP 2009285867
(62) Divisional of application: 10837479.4
(71) Applicant: Sharp Kabushiki Kaisha, Osaka-shi, Osaka 545-8522 (JP)
(72) Inventor: Hirota, Toru, Osaka-shi Osaka 545-8522 (JP); Kudoh, Noriyuki, Osaka-shi Osaka 545-8522 (JP); Kawaguchi, Yukimi, Osaka-shi Osaka 545-8522 (JP); Ohi, Yuhji, Osaka-shi Osaka 545-8522 (JP); Ogasawara, Yoshiyasu, Osaka-shi Osaka 545-8522 (JP); Watanabe, Ryuhsuke, Osaka-shi Osaka 545-8522 (JP); Yamada, Hajime, Osaka-shi Osaka 545-8522 (JP); Okuda, Nario, Osaka-shi Osaka 545-8522 (JP); Ogasawara, Takahiro, Osaka-shi Osaka 545-8522 (JP)
(74) Representative: Müller - Hoffmann & Partner

(57) **Abstract**

Provided is a program-information displaying device characterized by including: a program-information acquiring unit configured to acquire program information pieces; a full-program-display processing unit configured to respectively display the program information pieces in a plurality of program cells in a full-program display region, the program cells being defined by a temporal axis and a channel axis crossing the temporal axis; a recommended-program-information selecting unit configured to select particular program information pieces from the program information pieces acquired by the program-information acquiring unit; a recommended-program storage unit configured to store therein program information pieces of selected recommended programs in a manner associable the program information pieces for displaying the full-program display region; and a recommended-program-display processing unit configured to display the program information pieces of the recommended programs stored in the recommended program storage unit in a recommended-program display region in alignment with the temporal axis of the full-program display region.

## Description

### TECHNICAL FIELD

The present invention relates to a program-information displaying technique, and particularly relates to a program-information displaying technique of displaying a recommended program.

### BACKGROUND ART

Nowadays, with wide spread of digital television receivers and an increase of channels, an electronic program guide (EPG) has been used for checking and reserving programs, for example. Generally, in such program information providing service, program broadcast schedule information of broadcast stations is displayed on the screen in the same display format as that of a "radio and television program section" printed in a newspaper.

Also, by using, for example, a method disclosed in Patent Document 1, a favorite list of program contents or channels (recommendations) that a viewer may prefer more than others can be displayed on the basis of program information providing service and a past viewing history.

With the technique described in the following Patent Document 1, programs of higher priority scheduled to be broadcasted in predetermined future several hours (several days) are one-dimensionally displayed (in a recommended program guide) with a horizontal axis representing a temporal axis on the basis of the user's viewing history. The user can select a channel automatically according to the recommended program guide by using the display as a user interface. Further, a program whose priority parameter is lower than a predetermined value is displayed as a vacant time period in which no program desirable to the user exists. During the vacant time period including no program, the device is in a standby state.

### PRIOR ART DOCUMENT

### PATENT DOCUMENT

PATENT DOCUMENT 1: Japanese Patent Application Publication No. 2000-333085

### SUMMARY OF THE INVENTION

### PROBLEMS TO BE SOLVED BY THE INVENTION

However, the technique described in the aforementioned Patent Document 1 has the following problem. Specifically, the technique displays only the program guide created based on the past viewing history. For this reason, in order to know what programs are broadcasted in the same time period in the program guide, the user needs to switch the display screen over to that for an ordinary program guide to check the programs.

In addition, in order to view a recommended program at power on, the viewer needs to display the recommended program guide after the last channel viewed immediately before power off is selected and then to select the recommended program, or needs to press a special switch such as a switch for calling automatic channel selection mode. Thus, the operations are complicated. Further, since the ordinary program guide display is used for reservation operations such as a viewing reservation, the technique has a problem that it is difficult to reserve a program while checking whether or not the program desired to be reserved is the recommended program.

Moreover, in order to view a recommended program at power-on of the device, the viewer needs to display the recommended program guide after the last channel viewed immediately before power off is selected, and then to select the recommended program, or needs to press a switch for calling automatic channel selection mode.

An object of the present invention is to simplify an operation of a user interface which is a program guide including recommended programs.

Also, another object of the present invention is to make a channel selection operation user-friendly in simplifying the operation of the user interface which is the program guide including the recommended programs.

### MEANS FOR SOLVING THE PROBLEMS

An aspect of the present invention provides a program-information displaying device characterized by comprising: a program-information acquiring unit configured to acquire program information pieces; a full-program-display processing unit configured to respectively display the program information pieces in a plurality of program cells in a full-program display region, the program cells being defined by a temporal axis and a channel axis crossing the temporal axis; a recommended-program-information selecting unit configured to select particular program information pieces from the program information pieces acquired by the program-information acquiring unit; a recommended-program storage unit configured to store therein program information pieces of selected recommended programs in a manner associable with the program information pieces for displaying the full-program display region; and a recommended-program-display processing unit configured to display the program information pieces of the recommended programs stored in the recommended program storage unit in a recommended-program display region in alignment with the temporal axis of the full-program display region. Note that particular recommended programs are linked with corresponding programs in a full-program display. Thus, the guide of the programs recommendable to the user and the program guide of all the channels can be simultaneously displayed based on a viewing history or the like, and what programs are to be broadcasted in a time period of a recommended program can be checked easily. At this time, both the screens are desirably displayed with a time-axis display region placed in between.

The program-information displaying device is characterized by further comprising a program-guide display control unit configured to control the full-program-display processing unit and the recommended-program-display processing unit so that display of one of associated program cells is controlled in accordance with display of the other cell based on association between the program information pieces in the recommended-program region stored in the recommended program storage unit and the program information pieces for displaying the full-program display region. The visibility for the user can be enhanced by providing such displaying (such as color or hatching) that indicates that the programs are the same program.

The program-information displaying device is characterized by further comprising a program-guide operation control unit configured to perform control to make an operation of one of associated program cells equivalent to an operation of the other cell based on the association between the program information pieces in the recommended-program region stored in the recommended program storage unit and the program information pieces for displaying the full-program display region. Thereby, focusing, viewing, reservation, and the like can be performed from any of the full program guide and the recommended program guide (region). In addition, viewing and recording reservations can be made from the recommended-program region.

The program-information displaying device is **characterized in that** the program-guide display control unit moves the channel axis in the full-program display according to a focus movement in the recommended-program display region. In addition, the program-guide display control unit moves the channel axis in units of a group of a plurality of broadcast stations in the full-program display according to a focus movement in the recommended-program display region. Moreover, the recommended-program-information selecting unit displays the recommended programs on the basis of at least one of a viewing history and an operation history of programs. Furthermore, the recommended-program-display processing unit displays a program as an interstitial program in a program cell in a time period in which no recommended program exists, the program being of the same broadcast station as that of a recommended program in a time period before or after the time period in which no recommended program exists. In addition, the program cell displaying the interstitial program indicates shortage on the temporal axis for a broadcast start time or a broadcast end time.

The program-information displaying device is characterized by further comprising an automatic recommended-program selection function of automatically selecting a program on the basis of display of the recommended-program region. By setting a menu, a selection of a program to be selected at the power on can be made between the channel viewed at the power off and a recommended program based on the user viewing history.

The program-information displaying device is characterized by further comprising a display-region change function of displaying a program cell region in an enlarged or reduced manner in the display of the recommended-program region. The program-information displaying device is characterized by further comprising a function of switching between displaying both the recommended-program display and the full-program display and displaying either one of the displays.

In addition, an aspect of the present invention provides a program-information displaying device including: a program-information acquiring unit configured to acquire program information pieces; a full-program-display processing unit configured to respectively display the program information pieces in a plurality of program cells in a full-program display region, the program cells being defined by a temporal axis and a channel axis crossing the temporal axis; a recommended-program-information selecting unit configured to select particular program information pieces from the program information pieces acquired by the program-information acquiring unit; a recommended-program storage unit configured to store therein the program information pieces of selected recommended programs in a manner associable with the program information pieces for displaying the full-program display region; and a recommended-program-display processing unit configured to display the program information pieces of the recommended programs stored in the recommended program storage unit in a recommended-program display region in alignment with the temporal axis of the full-program display region, the program-information displaying device characterized by comprising a start-up setting unit configured to enable start-up with a recommended program to be set on a basis of display of the recommended-program display region (with reference to a time period). Note that particular recommended programs are linked with corresponding programs in the full-program display. Thus, the guide of the programs recommendable to the user and the program guide of all the channels can be simultaneously displayed based on the viewing history or the like, and what programs are to be broadcasted in a time period of a recommended program can be checked easily. At this time, both the screens are desirably displayed with the time-axis display region placed in between.

The program-information displaying device is **characterized in that**, on a basis of the setting of start-up with the recommended program by the start-up setting unit, the program-information displaying device causes start-up with a last channel at the start-up, and later automatically switches to the recommended program. In addition, the program-information displaying device informs that the switching to the recommended program will be performed, at the time of displaying the last channel. Moreover, the program-information displaying device further informs an operation method for cancelling the switching to the recommended program to keep the displaying of the last channel, at the time of displaying the last channel. The present invention may be a television receiver comprising the program-information displaying device described above.

Another aspect of the present invention provides a program information displaying method characterized by comprising: a program-information-piece acquisition step of acquiring program information pieces; a full-program-display processing step of displaying the program information pieces, respectively, in a plurality of program cells in a full-program display region, the program cells being defined by a temporal axis and a channel axis crossing the temporal axis; a recommended-program-information selection step of selecting particular program information pieces from the program information pieces acquired by the program-information acquiring unit; a recommended-program storage step of storing therein program information pieces of selected recommended programs in a manner associable with the program information pieces for displaying the full-program display region; and a recommended-program-display processing step of displaying the program information pieces of the recommended programs stored in the recommended program storage step in a recommended-program display region in alignment with the temporal axis of the full-program display region.

Still another aspect of the present invention provides a program information displaying method for displaying a full-program display and a recommended-program display as program information pieces, the method characterized by comprising the steps of: displaying a screen of a last channel (last view); determining whether or not a setting for start-up with a recommended program is made; when the setting for start-up with a recommended program is made, acquiring a current time and displaying information indicating that a recommended-program information piece is being acquired; and acquiring channel information of a recommended program at the current time, selecting a recommended program on a basis of the channel information, and displaying the recommended program on the screen.

The present invention may be a program for causing a computer to execute the program information displaying method described above, or a computer-readable recording medium in which this program is recorded. The program may be obtained by a transmission medium such as the Internet.

The present description includes the content in its entirety described in the description and/or the drawings of Japanese Patent Application No. 2009-286069 and Japanese Patent Application No. 2009-285867 which are bases of the priority of this application.

### EFFECTS OF THE INVENTION

According to the present invention, a program different from a recommended program but in the same time period can be easily checked, and thereby it is possible to prevent missing of a program in the same time period which is other than the recommended program and which the user wishes to view.

In addition, it is possible to set start-up with a recommended program on the basis of the display of a recommended-program display region and possible to select prohibition of automatic transition to the recommended program and transition based on an operation by the user or the like. Thus, it is also possible to automatically continue viewing a favorite program of the user and prohibit a viewed program from switching from the last program to another.

### BRIEF DESCRIPTION OF THE DRAWINGS

Fig. 1 is a functional block diagram showing a configuration example of a digital broadcast receiver including a program-information displaying device according to this embodiment.
Fig. 2 is a diagram showing a configuration example of an electronic program guide which is created by the program-information displaying device shown in Fig. 1 and is displayed on a display.
Fig. 3 is a diagram showing a more specific display example of the recommended program display shown in Fig. 2, the diagram being for exemplarily showing an operation during channel viewing in the display of a recommended-program region.
Fig. 4 is a diagram showing an example of display switching based on a user operation such as moving a focus position by moving a cursor in the full screen display example added with the recommended program display, the full screen display example being shown in Fig. 2.
Fig. 5 is a flowchart showing a flow of program displaying processing according to this embodiment.
Fig. 6 is a flowchart showing a flow of program guide operation processing.
Fig. 7 is a diagram showing a modification of displaying a recommended program.
Fig. 8 is a diagram showing a first displaying example at start-up.
Fig. 9 is a diagram showing a second displaying example at the start-up.
Fig. 10 is a flowchart showing a flow of displaying processing at the start-up.

### EXPLANATION OF THE REFERENCE NUMERALS

A ... digital broadcast receiver, AT ... antenna, BL ... bus line, NT ... network, 1 ... front-end, 3 ... demultiplexer, 5 ... video/audio decoding unit, 6 ... program-information decoding unit (program-information acquiring unit), 7 ... audio outputting unit, 9 ... viewing-history analyzing unit, 10 ... full-program-guide display processing unit, 11 ... recommended-program extracting unit, 13 ... recommended-program-region display processing unit, 15 ... screen synthesizing unit, 17 ... display unit, 19 ... recommended-program selection processing unit, 21 ... remote-controller light-receiving unit, 23 ... control unit, 23a ... program-guide display control unit, 23b ... program-guide operation control unit, 25 ... memory unit, 25a ... recommended-program table, 27 ... communication unit

### MODE FOR CARRYING OUT THE INVENTION

In the present description, a recommended program means a program which is recommended from a device on the basis of a viewing history or the like, while an interstitial program means a program in a time period where no recommended program exits which is selected on the basis of a recommended program adjacent to the interstitial program. A term which is a particular program selected on the basis of a certain criterion (such as a category of the program) is a broader term than the recommended program.

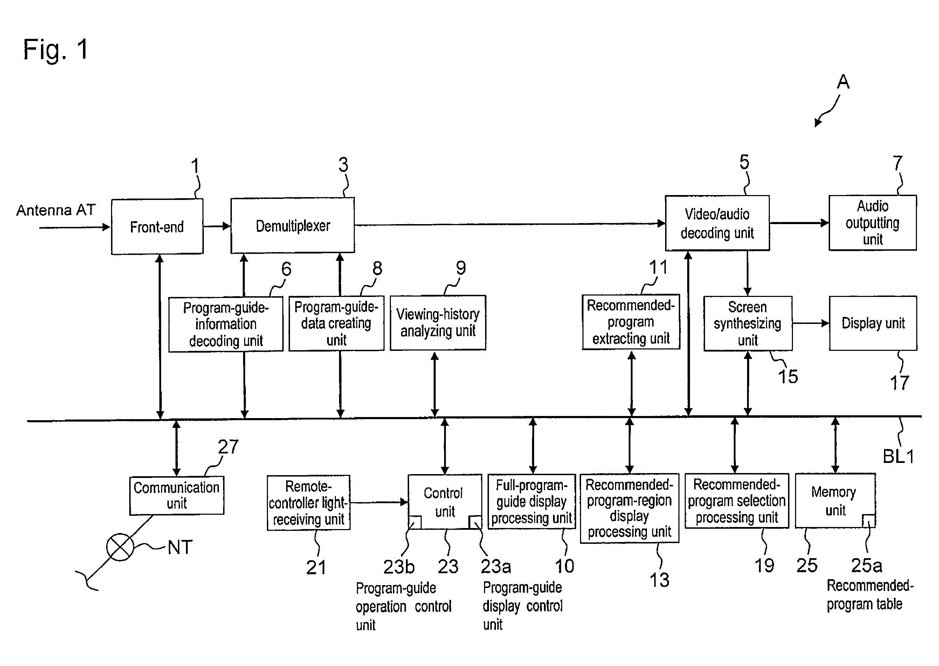

Hereinafter, a technique of displaying program information according to an embodiment of the present invention will be described by referring to the drawings. Fig. 1 is a functional block diagram showing a configuration example of a digital broadcast receiver including a program-information displaying device according to this embodiment.

A digital broadcast receiver A shown in Fig. 1 includes: a front-end 1 including a tuner configured to select a broadcast program from a broadcast signal received through an antenna AT, and the like; a demultiplexer 3 configured to divide a multiplexed signal into a video signal and an audio signal; a video/audio decoding unit 5 configured to decode the video signal and the audio signal; an audio outputting unit (such as a speaker) 7 configured to output decoded audio; a program-information decoding unit (program-information acquiring unit) 6 configured to decode program information extracted from SI or the like included in a broadcast wave and outputted from the demultiplexer 3; a program-guide-data creating unit 8 configured to create electronic program guide (EPG) data from the program information acquired by the program-information acquiring unit 6; a full-program-guide display processing unit 10 configured to perform control of displaying the full program guide based on the created program guide data; a screen synthesizing unit 15 configured to synthesize video, program display data, and the like; and a display unit (such as a display) 17 configured to display video synthesized by the screen synthesizing unit 15.

The digital broadcast receiver A further includes: a control unit (CPU) 23 configured to control entire functional units; a memory unit 25 configured to store a program and the like for causing the CPU 23 to execute various processing; and a remote-controller light-receiving unit 21 configured to receive a remote controller signal from an unillustrated remote controller device. The digital broadcast receiver A further includes: a viewing-history analyzing unit 9 configured to analyze a viewing history by causing the control unit 23 to execute the program stored in the memory unit 25; a recommended-program extracting unit 11 configured to extract a recommended program from programs on the basis of the viewing history and the like; a recommended-program-region display control unit 13 configured to perform control of displaying a recommended-program region; and a recommended-program selection processing unit 19 configured to perform selection processing of the recommended program from the recommended-program region. The memory unit 25 stores a recommended-program table 25a. A program-guide display processing unit (program-guide display control unit) 23a according to this embodiment includes: a publicly known display processing unit configured to perform general full-program display; and the aforementioned recommended-program-region display processing unit 13. The digital broadcast receiver A also includes a program-guide operation control unit 23b configured to perform processing while an operation for one of programs respectively in a full-program display region and a recommended-program display region is considered to correspond to the other one of the programs.

In addition, the digital broadcast receiver A may additionally or separately be provided with a communication unit 27 configured to receive a broadcast signal through a communication network NT instead of the antenna AT. Note that a portion related to creation of the electronic program guide including the recommended-program region corresponds to the program-information displaying device. Recommended programs may include contents provided via the network.

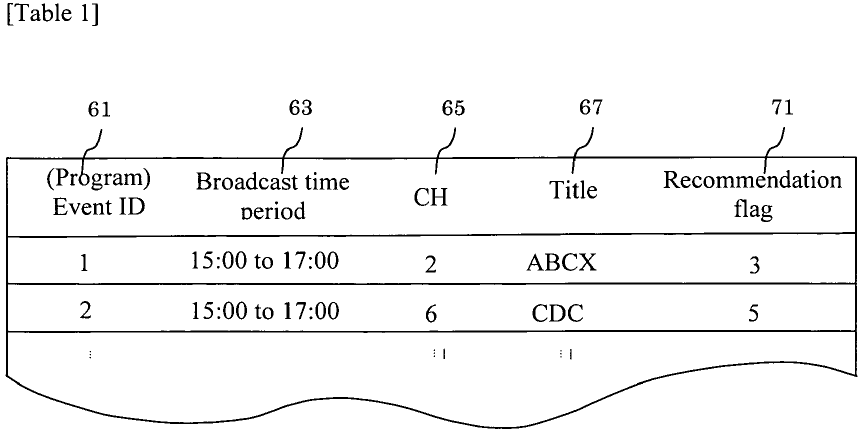

Table 1 is a table showing a configuration example of the recommended-program table 25a stored in the memory unit 25. As shown in Table 1, the recommended-program table 25a has a program name (event ID) 61, a broadcast time period 63, a channel 65, a title 67, and a recommendation flag 71. Thereby, the recommended-program region to be described later can be displayed. Program information for general full-program display has a program name (event ID) 61, a broadcast time period 63, a channel 65, and a title 67.

Note that the program information for the full-program display and the information in the recommended-program table 25a are associated with each other on the basis of the broadcast time period 63 by using the event ID 61, for example. Alternatively, the information may be associated with each other on the basis of the broadcast time period and the channel. A program cell for the full-program display and a recommended-program cell for recommended-program display can be handled by being displayed in the same manner. In other words, the program-information displaying device (program-guide display control unit 23a) is configured such that, when one of the program cells is colored and focused, the other program cell can be displayed in the same manner. Further, the program-information displaying device (program-guide operation control unit 23b) can be configured such that an operation performed on a focused program in a program cell for one of the full-program display and the recommended-program display from a GUI (for viewing reservation, recording reservation, viewing execution, and the like) is regarded as an equivalent operation performed on the corresponding program cell for the other.

Note that the recommendation flag 71 has a value indicating displaying priority. For example, when a recommendation flag is expressed in a number, a larger number has higher priority. When programs are displayed in the same broadcast time period, one of the programs which has higher priority should preferably be displayed in the recommended-program region. The priority corresponds to priority to be described later. The first line in Table 1 has the event ID 61 of "1," the broadcast time period of 15:00 to 17:00, the channel of "2," the title of "ABCX," and the recommendation flag (priority) of "3." In contrast, the second line in Table 1 has the event ID 61 of "2," the broadcast time period of 15:00 to 17:00, the channel of "6," the title of "CDC," and the recommendation flag (priority) of "5." Accordingly, the value of the recommendation flag is larger in the program having the event ID 61 of "2" than the program having the event ID 61 of "1." This means that the program having the event ID 61 of "2" is shown in the recommended-program region. This recommended-program table is created by using the priority or the like as a criterion on the basis of an information table based on the general program information on all the programs. The programs on both the table are always associated with each other. Thus, when an operation of viewing, reserving or the like is performed based on one of the program cells respectively in the recommended-program region and the full-program display region, the operation is effective in both the program cells. In addition, the program cells of both the regions are configured to indicate to that effect for the user's convenience.

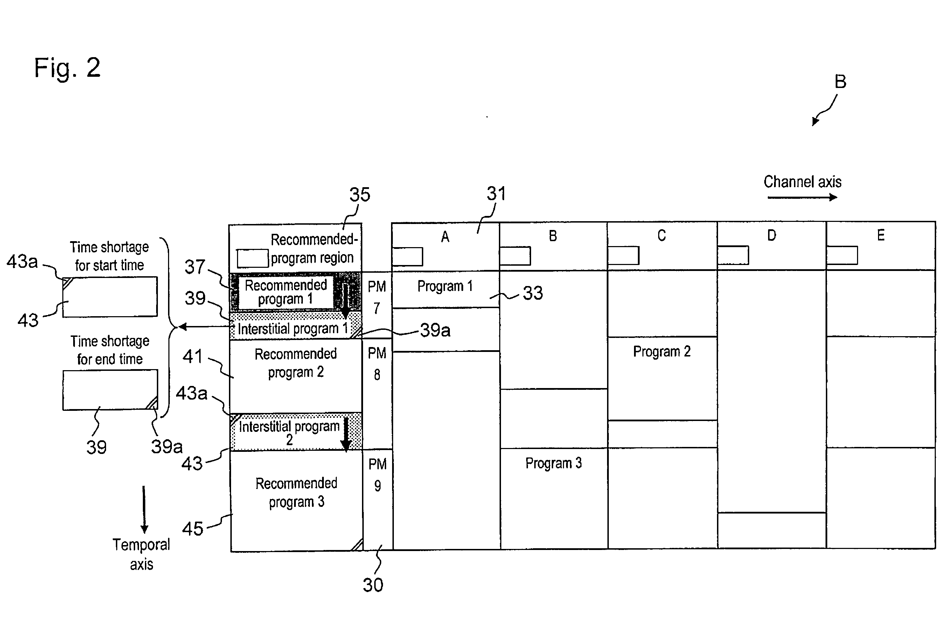

Fig. 2 is a diagram showing a configuration example of an electronic program guide which is created by the program-information displaying device shown in Fig. 1 and is displayed on the display 17. An electronic program guide B shown in Fig. 2 is displayed by taking as an example a general full-program display constituted of a large number of program cells (a so-called radio and television program section with a horizontal axis of a channel axis and a vertical axis of a temporal axis (shown by a broadcast time-period display 30) in the drawing. The same idea can hold true for an electronic program guide in a different display format. This display is herein referred to as a full-program display. In the program information display shown in Fig. 2, a recommended-program display region 35 including full screen display and the temporal axis is provided, for example, on the left side of the full-program display. Although the recommended-program display region 35 having a single column is displayed in Fig. 2, the number of the columns is not limited. In addition, the position at which the recommended-program display region 35 is arranged is not limited to the left end. However, it is preferable that the recommended-program display region 35 be initially displayed at the same position whenever an operation of displaying the electronic program guide is performed. Also, the region for the recommended programs is herein provided, but a display region other than the full-program display region is not limited to the recommended program display region, as long as the region is a region of displaying particular programs which are selected from the full-program display region without specifying a channel and according to a certain algorithm.

The description is herein continued on the basis of the display format in Fig. 2. In an example of the full-program display, broadcast stations A, B, C, D, E, and ... are displayed in a broadcast station region 31. Three hours from around 7 p.m. to around 9 p.m. are displayed as a broadcast time period. Although program information can be displayed in all of program cells 33 actually, only information of program cells related to the recommended-program display is herein described for simplicity. Recommended programs are obtained by selecting more frequently viewed programs and the like including a channel, a category, and a keyword from the full programs on the basis of the user's viewing history or the like, for example.

Meanwhile, the priority related to the displaying to prevent program display on the recommended-program display region 35 from being overlapped can be determined in the following method, for example.

1) Higher priority is given to a program which is the same as a program which was viewed, recorded, etc., last week (such as a serial in a fixed time period on a fixed day).

2) Higher priority is given to a program of a genre which matches a genre of a program frequently viewed in a certain time period on a certain day (for example, from around 18:00 to around 21:00 on Sunday) in which a program is selected. As a genre history, the number of times of viewing programs of each genre is accumulated on day and time period bases. Then, the genres are ranked based on the number of the viewing times. For example, if news is ranked first, sports are ranked second, and so on in the genre history, searching is performed to find a unique news program. If there is no match, searching is performed to find a program belonging to the genre of the sports ranked second.

In addition, it is preferable that the priority of a program which has been reserved be changed before executing and after executing processing based on the reservation. The following is an example thereof.

a) If the viewing reservation is actually executed, higher priority is provided. If the reservation is cancelled, the priority is not changed. That is, when the viewing of the program reserved for viewing is executed, the priority is changed.

b) If the recording reservation is actually executed, higher priority is provided. If the reservation is cancelled, the priority is not changed. That is, when playing processing after recording of the program reserved for recording is executed, the priority is changed. Note that a program reserved for recording is desirably registered in a history with higher priority. This is because recording is in general likely to reflect the taste of the viewer more than viewing. However, various modifications can be made to the aforementioned idea.

In Fig. 2, the recommended-program display region 35 shows a recommended program 1 (a program 1 in the broadcast station A) 37, an interstitial program (1) 39, a recommended program 2 (a program 2 in the broadcast station C) 41, an interstitial program (2) 43, and a recommended program 3 (a program 3 in the broadcast station B) 45 in this order along the temporal axis 30 on the basis of the data in the aforementioned recommended-program table. Each interstitial program in the recommended-program display region 35 is a program which is not the recommended program. However, if there is a vacant time between adjacent recommended programs placed along the temporal axis, the interstitial program occupies the interstitial vacant time. Incidentally, a mark 39a in the lower right corner of the interstitial program (1) 39 indicates time shortage for a broadcast end time in the program cell display of the interstitial program (1) 39, and a mark 43a in the upper left corner of the interstitial program (2) 45 indicates time shortage for a broadcast start time in the program cell display of the interstitial program (2) 43.

As described above, the electronic program guide is generated and displayed in a configuration in which, for example, the recommended program guide of the recommended programs and the full program guide of all the channels are arranged on the left side of the screen and on the right side of the screen, respectively. Thereby, the recommended program guide and the full program guide which share the temporal axis can be listed. In addition, the full program guide in the same time period as the recommended-program region can also be referred to while an operation of viewing or the like of a favorite program by using the recommended program guide is performed. Thus, missing of a different program due to focusing on a recommended program only is less likely to occur.

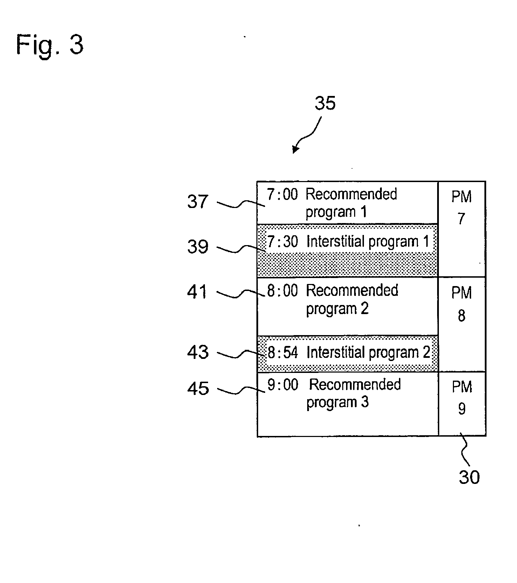

Fig. 3 is a diagram showing a more specific display example of the recommended-program display shown in Fig. 2, and is a diagram for exemplarily showing an operation during channel viewing in the recommended-program region display 35. For example, suppose that the recommended program (1) 37, the interstitial program (1) 39, the recommended program (2) 41, the interstitial program (2) 43, and the recommended program (3) 45 are displayed in the three hours from around 7 p.m. to around 9 p.m. as in Fig. 2. An operation during the channel viewing in the recommended-program region is as follows.

(1) At 7:00 p.m., the channel (broadcast station A) of the recommended program (1) 37 is selected, and video is displayed on the display screen (display).

(2) At 7:30 p.m., the recommended program (1) 37 ends, but the same channel (the broadcast station A) is kept displayed (the mark denoted by reference numeral 39a in Fig. 2 is provided). Thus, new channel selection processing is not performed at 7:30 p.m. (video of the program of the interstitial program (1) 39 is displayed on the display screen (display)).

(3) At 8:00 p.m., the channel (broadcast station C) of the recommended program (2) is selected, and video is displayed on the display screen (display).

(4) At 8:54 p.m., the channel (broadcast station B) of the recommended program (3) 45 which is the next recommended program is selected, and video is displayed on the display screen (display) (the broadcast station B: because of the mark 43a for the time shortage for the broadcast start time in Fig. 2, the broadcast start time of the interstitial program (2) 43 is not displayed in the recommended-program display region 35.

(5) At 9:00 p.m., the recommended program (3) 45 is displayed on the recommended-program display region 35, and video of the program 3 of the broadcast station B is displayed on the display screen (display). A new channel is not selected at this timing.

Upon selection of the viewing processing of a recommended program in the recommended-program region, a series of processing steps from (1) to (5) shown above is automatically performed. Here, pressing an end button on the remote controller, for example, can cancel the aforementioned automatic serial processing steps.

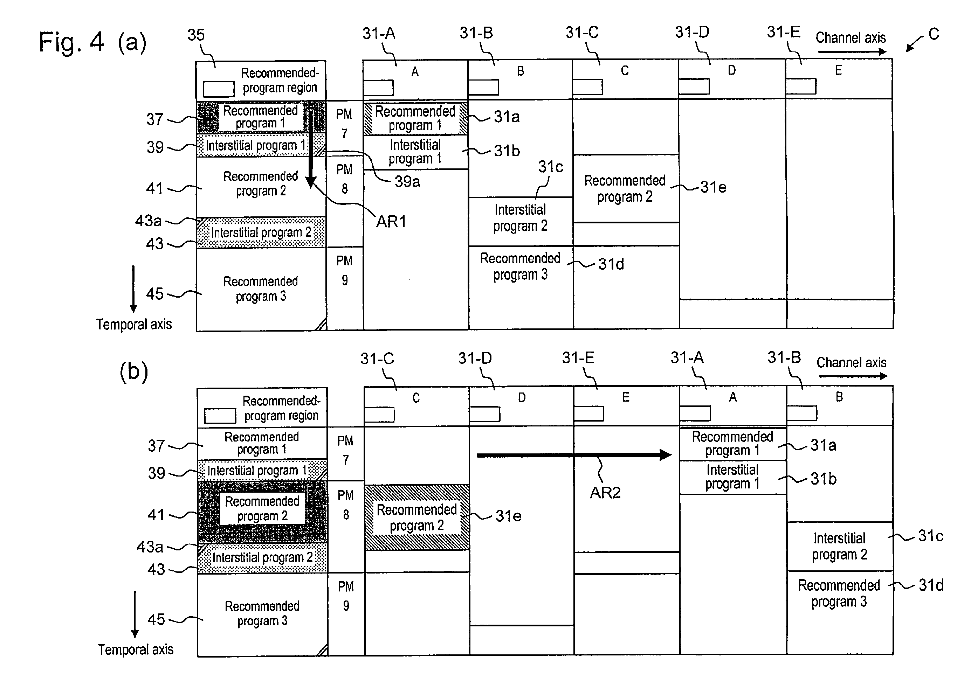

Fig. 4 is a diagram showing an example of display switching based on a user operation such as moving a focus position by moving a cursor in the full screen display example added with the recommended program display, the full screen display example being shown in Fig. 2.

Part (a) of Fig. 4 is basically the same as the display example shown in Fig. 2. However, Part (a) of Fig. 4 is a diagram showing in more detail how the recommended programs and the interstitial programs are selected from the full screen display, and is a diagram also showing how the program guide display is changed according to the movement of the focus.

Concerning the recommended program (1) 37 in the recommended-program display region 35, suppose a case where a program 31a from 7 p.m. to 7:30 p.m. on a broadcast station A 31-A is selected based on the priority from the viewing history or the like, and a program cell of the program is focused. Next, after the broadcast of the recommended program (1) 37 ends at 7:30 p.m., an interstitial program (1) 31b to be broadcasted from 7:30 p.m. to 8:30 p.m. on the broadcast station A is selected and displayed as the interstitial program (1) 39 in the recommended-program display region 35 (refer to AR1). The interstitial program (1) 39 is to be broadcasted until 8:30. However, since a program (2) 31e on the broadcast station C in a time period from 8 p.m. to 8:54 p.m. is a recommended program, the recommended program (2) 41 is displayed in the time period from 8 p.m. to 8:54 p.m. in the recommended-program display region 35. Thus, as denoted by the reference numeral 39a, the display indicating the time shortage for the broadcast end time of the interstitial program (1) 39 is provided.

The next recommended program is a program (3) 31d on the broadcast station C. Since the program is started to be broadcasted at 9:00 p.m., an interstitial program (2) 31c which is a program to be broadcasted on the same broadcast station B as for the recommended program (3) 31d is selected and displayed as the interstitial program (2) 43 in the recommended-program display region 35 in a time period from 8:54 p.m. to 9:00 p.m. At this time, since the interstitial program (2) 31 c is started to be broadcasted at 8:30 p.m., the display 43a indicating the time shortage for the broadcast start time is added to the interstitial program (2) 43 in the recommended-program display region 35. Next, from 9:00 p.m., the recommended program (3) 45 is displayed in the recommended-program display region 35 on the basis of the recommended program (3) 31d on the same broadcast station B.

Now, for example, when the recommended program (1) 37 is focused (the cursor is moved thereto) in the recommended-program display region 35, the broadcast station (A) 31-A is moved and displayed just on the right side of the recommended-program display region 35 with the time display region placed in between. Further, mutually corresponding (the same) program cells 37 and 31a in the recommended-program display region 35 and the full-program display region 31 are displayed to indicate that the program cells have the same program information displayed therein, while being provided with a distinguishable color or hatching. Next, when the focus is moved in a direction to a later time on the temporal axis (time period from 8 p.m. to 9 p.m.) as denoted by reference numeral AR1, the recommended program (2) 43 in the recommended-program display region 35 is focused as shown in Part (b) in Fig. 4. Also at this time, a program cell of the recommended program (2) 31e is focused in a program cell region from 8 p.m. to 9 p.m. on a broadcast station C 31-C in the full screen display region 31 on the basis of a correspondence between the display regions. At this time, it is preferable to move the focus along a broadcast station (channel) axis so that the broadcast station C 31-C is located on the left end of the full-program display region 31. Note that, the broadcast stations are desirably moved in a unit of five serial broadcast stations A to E. For example, in Part (a) of Fig. 4, the broadcast stations are arranged in the full-program display 31 in an order of A-B-C-D-E, and in Part (b) of Fig. 4, the broadcast stations are arranged in an order of C-D-E-A-B. The changing of the order of the display along the channel axis for the program display in units of a certain group of multiple broadcast stations as described above provides an effect that the burden in display change processing is reduced.

Incidentally, in order to move the cursor in the program display, a color button on the remote controller may be used for the operation, for example.

In addition, the display unit is desirably capable of switching program guide displays among the full screen display, the recommended-program region display, and the both. Moreover, in the case of only the recommended-program region display, the display may be enlarged, and even program detail information may also be displayed.

Meanwhile, in the case of both the displays of the full screen display and the recommended-program region display, the cursor is placed on a certain program cell in the full screen display. If the program cell is equivalent to a recommended program, the recommended-program region may be automatically displayed. If the program cell is not equivalent to the recommended program, the display of the recommended-program region may be automatically determined.

Moreover, a button dedicated for the recommended-program display may desirably be provided on the remote controller for the following configuration. Specifically, in the case of only the full screen display, pressing the button desirably causes the recommended-program region to be also displayed. In the case of only the recommended program display, pressing the button or another button desirably causes the full screen display to be also displayed.

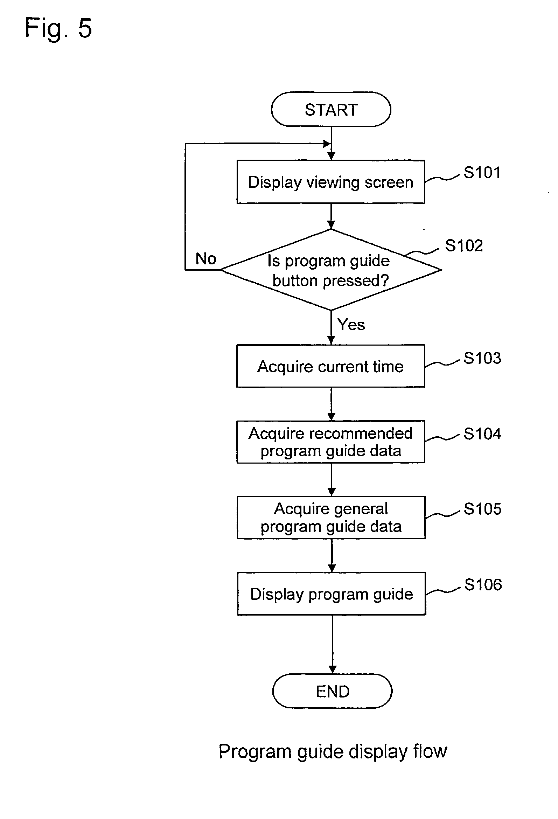

A flow of the aforementioned processing will be described below in detail. Fig. 5 is a flowchart showing a flow of program display processing according to this embodiment. Firstly, if a power button or the like on the remote controller is turned on and so on, the processing is started (START). In Step S101, a viewing screen is displayed on the display unit. Next, if a program display button is pressed in Step S 102 (Yes), the current time (for example, 7:15 p.m. or the like) is acquired in Step S103. In Step S104, recommended program guide data as shown in Table 1 is acquired (referred to). In Step S105, general (full-screen) program guide data (data for displaying a general EPG) is acquired. In Step S106, the aforementioned time 7:15 p.m. is referred to in one or both (Fig. 2 or the like) of the full-screen program guide and the recommended program guide on the basis of the user's instruction or the setting, so that information on a time period around the time is displayed on the display unit. This enables the display as shown in Fig. 2, Fig. 4 or the like.

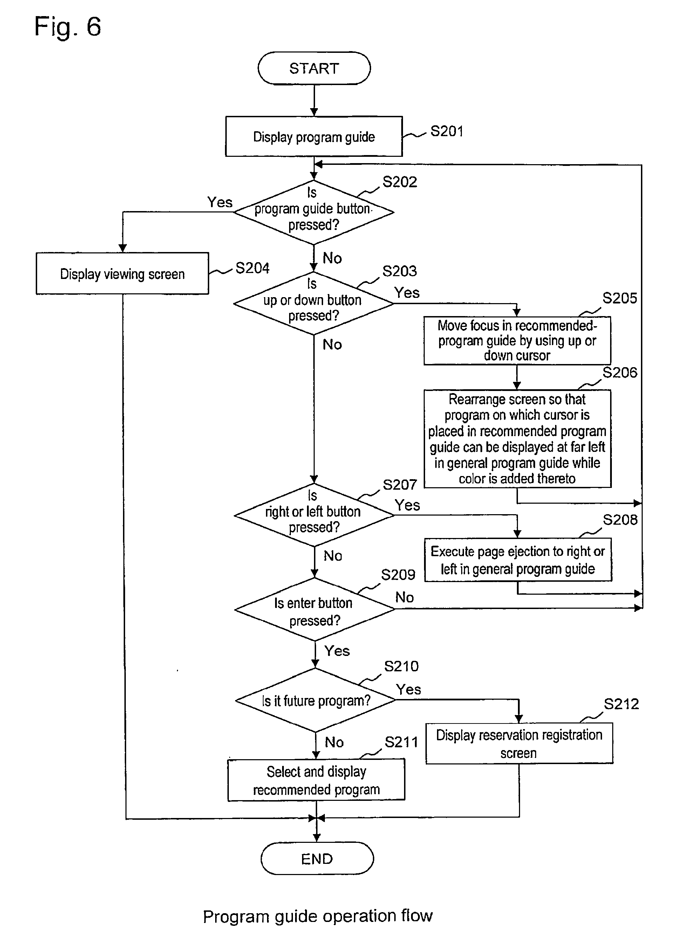

Fig. 6 is a flowchart showing a flow of program guide operation processing. A description is given while referring to Fig. 4. Firstly, the processing is started. In Step S201, the program guide is displayed. In this state, whether or not the program guide button is pressed is detected in Step S202. If the pressing of the program guide button is detected (Yes: this may hold true for a Back button), the processing proceeds to Step S204. Then, a program viewing screen is displayed, and the processing is terminated (END). In a case of No in Step S202 (a button other than the program guide button is pressed), the processing proceeds to Step S203. In a case of Yes in Step S203, the processing proceeds to Step S205. In Step S205, the focus is moved (moved along the temporal axis) by using an up or down cursor in the recommended-program region (guide). Then, in Step S206, the screen is rearranged so that a program on which the cursor is placed in the recommended program guide can be displayed, for example, at the left end of the general program guide (the general program guide in the full-program display). In addition, a program corresponding to the program on which the cursor is placed is displayed, while a color or the like is also added thereto. Then, the processing returns to Step S202.

In a case of No in Step S203, it is determined in Step S207 whether or not a right or left button is pressed. In a case of Yes, the processing proceeds to Step S208 in which page ejection (moving or the like in units of a group of multiple programs) to the right or left (in a direction of the broadcast station axis) is executed in the general program guide (full-program display). The processing returns to Step S202. In a case of No in Step S207, it is determined in Step S209 whether or not an Enter button is pressed. In a case of No, the processing returns to Step S202. In a case of Yes, the processing proceeds to Step S210. In Step S210, it is determined whether or not the program for which the Enter button is pressed is a future program (later than a program at a time point including the current time: for example, the current time is 7:20 p.m. in Fig. 2 and 4, a program scheduled for 7:30 or later). In a case of Yes, the processing proceeds to Step S212, that is the display proceeds to, for example, a screen on which reserved recording or the like is available. Then, the processing is terminated (a description of processing for the reserved recording is omitted). If the program for which the Enter button is pressed is not the future program (later than a program at a time point including the current time: for example, the current time is 7:20 p.m. in Fig. 2 and 4, a program scheduled for 7:30 or later) (No), the processing proceeds to Step S211, so that a recommended program is selected and displayed in the recommended program display region. Then the processing is terminated (END).

As described above, in the configuration in which the program guide for recommended programs and the program guide for all the channels are arranged on the left side and the right side, respectively, on the display unit, the program guides are generated and displayed. In accordance with the cursor movement in a recommended program in the program guide therefor, the left full-program display is desirably displayed based on the program.

Note that it is desirable to determine a channel to be displayed at power on depending on unillustrated menu settings recorded in the memory unit 25 shown in Fig. 1 and to select the channel by controlling the front-end 1. As the contents of the menu settings, there are, for example: a) a setting by which a recommended program or an interstitial program in a time period including the current time is focused; b) a setting by which the last channel is focused (a setting in general full-program-guide display); and the like. It is preferable that program guide be displayed so that a focused program cell is included within at least the screen display.

Also, if one of a recommended program and a program in the full program guide which are the same program is focused, it is desirable to explicitly show that the other program is focused by using color display. Moreover, a viewing or recording reservation can be made by selecting a future program in the recommended-program region generated by the recommended-program-region display processing unit 13.

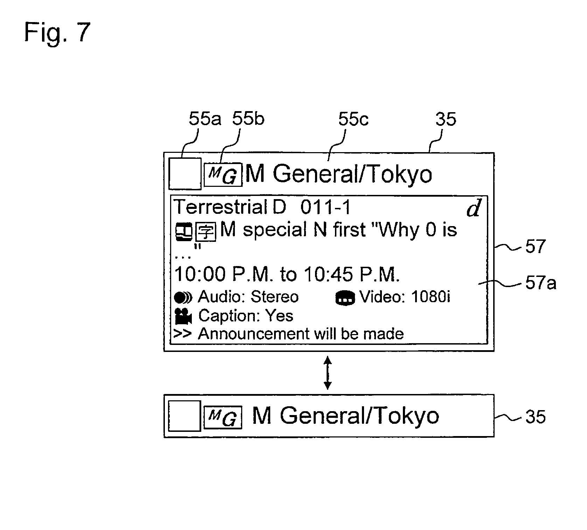

Fig. 7 is a diagram showing a modification of displaying a recommended program. As shown in Fig. 7, in display of a recommended program in the recommended-program display region 35, an icon display 55a of the recommended program (shown herein by a white square region) is displayed instead of a direct numeric icon (for example, 1, 3, 4, 6, ... or the like) in the general full-program display. A character such as "Recommendation" may be displayed in the icon display 55a. Further, a general icon 55b and broadcast station name display 55c are provided. This can explicitly show that the program is a recommended program. Program information 57a is displayed in a region 57 for this program information 57a. Incidentally, a simple display example in which the program information 57 and the like are not displayed in detail is shown in a lower part of the figure. Which one of an upper part and the lower part is displayed may be automatically determined based on the user setting or the area of display region for the recommended-program display.

In addition, in the case of displaying only the recommended-program region, the area of the display can be made smaller, which is convenient for a case where the area of display is small as in a mobile terminal having a TV function.

As described above, according to this embodiment, a program different from a recommended program but in the same time period can be easily checked. Thus, if the user prefers a program to the recommended program in the same time period, missing of the program can be prevented. Moreover, for example, a frequently viewed channel in the morning is automatically selected as a program displayed in the recommended-program region without a channel selection operation of the user. Thereby, the user can view the favorite program with a simplified operation. In sum, the present invention exerts the following effects.

(1) A guide of programs recommendable to the user based on a viewing history and a program guide of all the channels are simultaneously displayed on a single screen. Thereby, what programs are to be broadcasted in a time period of a recommended program can be checked easily.

(2) By setting a menu, a selection of a program to be selected at power on can be made between a channel viewed at power off and a recommended program based on the user viewing history.

(3) Viewing and recording reservations can be made from a recommended-program region.

Further, an operation of viewing, reserving or the like can be easily performed from the recommended-program region without a search for a program the user wishes to view or reserve from among many programs in the full program guide, which is convenient.

Still further, in the aforementioned embodiment, the configuration or the like illustrated in the accompanying drawings is not limited thereto, and can be modified as needed within a range of exerting the effects of the present invention. Besides, the present invention can be modified as needed and implemented without departing from the scope of the object of the present invention.

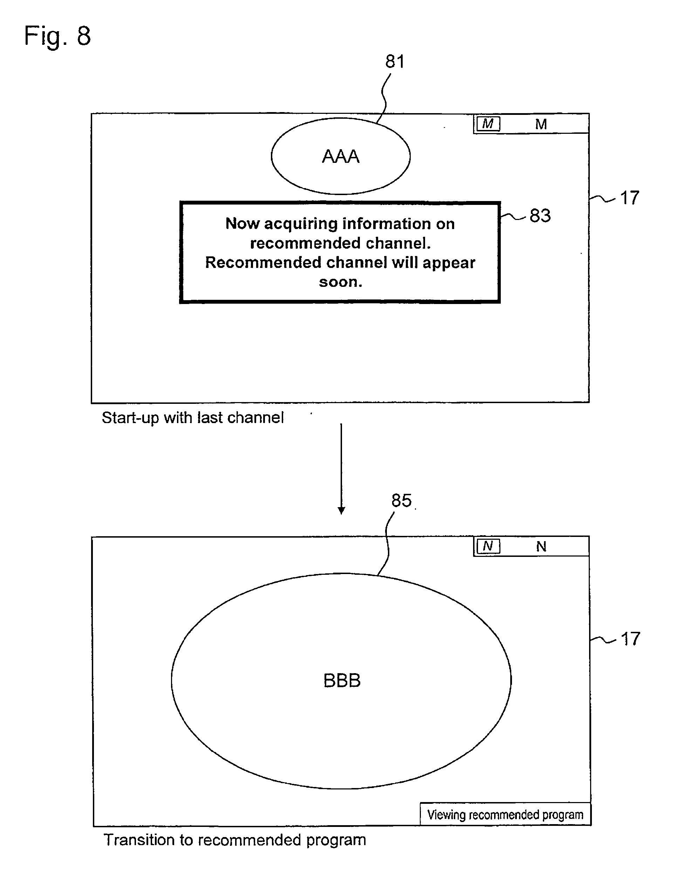

Fig. 8 is a diagram showing a state of start-up with a recommended program displayed. In an upper part of the figure, the display unit 17 includes a display 81 of "AAA" which is program display of the last channel on the same broadcast station as a broadcast station at the previous termination. In addition, as denoted by reference numeral 83, the user is informed (any of display and audio may be used) that, "Now acquiring information on recommended channel (recommended program). Recommended channel will appear soon." Then, the program of the last channel is switched to a program display "BBB" 85 corresponding to the recommended program, as shown in a lower part of the figure. Note that a start-up channel setting menu can be used for the setting. This can cause the display to automatically transition from the last channel to the recommended program at start-up, and thus has an advantage of saving the user operation. In addition, the information to the user can notify the user that switching to the recommended program is being processed and thus, can reassure the user even if the program display is switched suddenly.

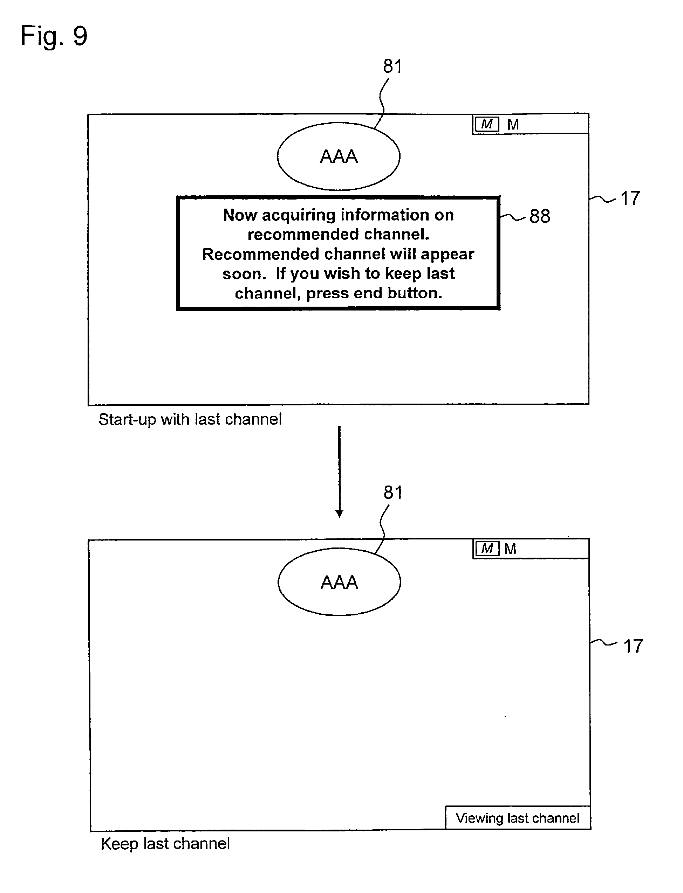

Fig. 9 is a diagram corresponding to Fig. 8 and showing an example in which the switching to the recommended channel is cancelled to keep the last channel. In an information example 88 in this case, according to an announcement such as "Now acquiring information on recommended channel (recommended program). Recommended channel will appear soon. If you wish to keep the last channel, press End button." the user is notified that the last channel can be kept by a certain operation. Thereby, the user can be given a choice. In this case, "AAA" 81 is kept in the program display (an upper part of Fig. 9 and a lower part of Fig. 9). Display for identifying a selected program or the contents of currently performed processing may be provided in an upper corner or a lower corner of the display unit.

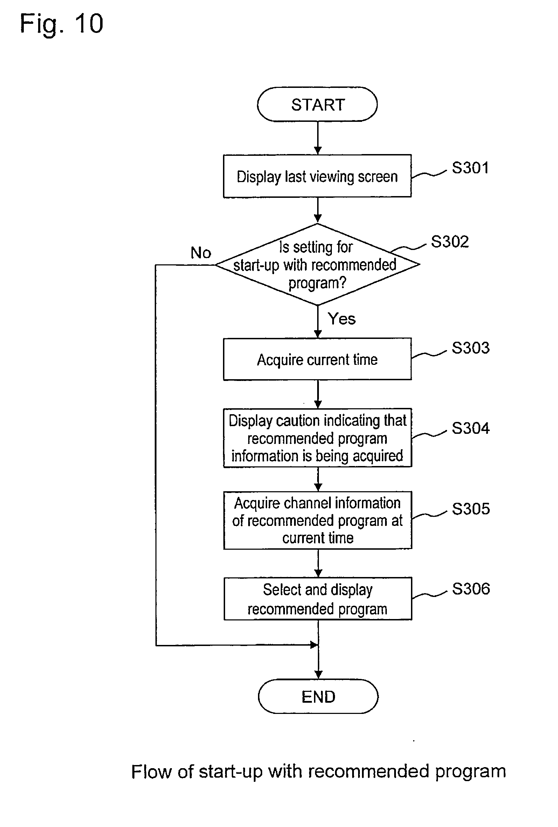

Fig. 10 is a flowchart showing a flow of processing of switching to a recommended program. As shown in Fig. 10, when the processing is started (the power is turned on and so on), the last channel (last viewing) screen is displayed in Step S301. Here, in Step S302, it is determined whether or not the setting is for start-up with a recommended program displayed. In a case of No, the processing is terminated (the display is switched to the recommended program). In a case of Yes, the processing proceeds to Step S303, so that the current time is acquired. In Step S304, the display indicating the recommended program information is being acquired is provided. In Step S305, channel information of the recommended program at the current time is acquired. In Step S306, the recommended program is selected based on the channel information and displayed on the screen. Thereby, even if the setting of switching to a recommended program has not been made, the switching to the recommended program is performed. Note that if the switching is not performed even in the case of making the setting of switching to a recommended program as shown in Fig. 9, Step S302 results in No. However, the display of the last channel can be kept by the user operation.

As described above, according to this embodiment, a program different from a recommended program but in the same time period can be easily checked on the full-program display. Thus, if the user prefers a program to the recommended program in the same time period, missing of the program can be prevented. Moreover, for example, a frequently viewed channel in the morning is automatically selected as a program displayed in the recommended-program region at power on. Thereby, the user can view the favorite program with a simplified operation. Even despite the user setting, the last channel can be kept at user's discretion.

Moreover, in the aforementioned embodiment, the configuration or the like illustrated in the accompanying drawings is not limited thereto, and can be modified as needed within a range of exerting the effects of the present invention. Besides, the present invention can be modified as needed and implemented without departing from the scope of the object of the present invention.

In addition, processing of units may be performed by recording a program for implementing functions described in this embodiment in a computer-readable recording medium, and by causing a computer system to read and execute the program recorded in this recording medium. Note that the "computer system" herein referred to includes an OS and hardware such as a peripheral device.

Also, the "computer system" includes a home page providing environment (or a displaying environment) in a case of using a WWW system.

Besides, the "computer-readable recording medium" is a storage device including a portable medium such as a flexible disk, a magneto optical disk, a ROM or a CD-ROM, as well as a hard disk or the like built in the computer system. Further, the "computer-readable recording medium" includes: one which dynamically holds the program for a short time like a communication wiring in a case of transmitting the program via a network such as the Internet or a communication line such as a telephone line; and one which holds the program for a certain time period like a volatile memory inside a computer system serving as a server or a client in the aforementioned case of transmitting the program. Moreover, the program may implement a part of the aforementioned functions, and furthermore, may be capable of implementing the aforementioned functions in combination with a program already recorded in the computer system.

### INDUSTRIAL APPLICABILITY

The present invention is usable for a program display device.

All publications, patents, and patent applications cited herein are incorporated herein by reference in their entirety.
Support for the claims and further embodiments are defined in the following itemized list:
1. A program-information displaying device characterized by comprising:
   a program-information acquiring unit configured to acquire program information pieces;
   a full-program-display processing unit configured to respectively display the program information pieces in a plurality of program cells in a full-program display region, the program cells being defined by a temporal axis and a channel axis crossing the temporal axis;
   a recommended-program-information selecting unit configured to select particular program information pieces from the program information pieces acquired by the program-information acquiring unit;
   a recommended-program storage unit configured to store therein program information pieces of selected recommended programs in a manner associable with the program information pieces for displaying the full-program display region; and
   a recommended-program-display processing unit configured to display the program information pieces of the recommended programs stored in the recommended program storage unit in a recommended-program display region in alignment with the temporal axis of the full-program display region.
2. The program-information displaying device according to item 1, characterized by further comprising a program-guide display control unit configured to control the full-program-display processing unit and the recommended-program-display processing unit so that display of one of associated program cells is controlled in accordance with display of the other cell based on association between the program information pieces in the recommended-program region stored in the recommended program storage unit and the program information pieces for displaying the full-program display region.
3. The program-information displaying device according to any one of items 1 and 2, characterized by further comprising a program-guide operation control unit configured to perform control to make an operation of one of associated program cells equivalent to an operation of the other cell based on the association between the program information pieces in the recommended-program region stored in the recommended program storage unit and the program information pieces for displaying the full-program display region.
4. The program-information displaying device according to item 2, **characterized in that** the program-guide display control unit moves the channel axis in the full-program display according to a focus movement in the recommended-program display region.
5. The program-information displaying device according to item 2, **characterized in that** the program-guide display control unit moves the channel axis in units of a group of a plurality of broadcast stations in the full-program display according to a focus movement in the recommended-program display region.
6. The program-information displaying device according to any one of items 1 to 5, **characterized in that** the recommended-program-information selecting unit displays the recommended programs on the basis of at least one of a viewing history and an operation history of programs.
7. The program-information displaying device according to any one of items 1 to 6, **characterized in that** the recommended-program-display processing unit displays a program as an interstitial program in a program cell in a time period in which no recommended program exists, the program being of the same broadcast station as that of a recommended program in a time period before or after the time period in which no recommended program exists.
8. The program-information displaying device according to item 7, **characterized in that** the program cell displaying the interstitial program indicates shortage on the temporal axis for a broadcast start time or a broadcast end time.
9. The program-information displaying device according to any one of items 1 to 8, characterized by further comprising an automatic recommended-program selection function of automatically selecting a program on the basis of display of the recommended-program region.
10. The program-information displaying device according to any one of items 1 to 9, characterized by further comprising a display-region change function of displaying a program cell region in an enlarged or reduced manner in the display of the recommended-program region.
11. The program-information displaying device according to any one of items 1 to 10, characterized by further comprising a function of switching between displaying both the recommended-program display and the full-program display and displaying either one of the displays.
12. A program-information displaying device including:
   a program-information acquiring unit configured to acquire program information pieces; a full-program-display processing unit configured to respectively display the program information pieces in a plurality of program cells in a full-program display region, the program cells being defined by a temporal axis and a channel axis crossing the temporal axis; a recommended-program-information selecting unit configured to select particular program information pieces from the program information pieces acquired by the program-information acquiring unit; a recommended-program storage unit configured to store therein the program information pieces of selected recommended programs in a manner associable with the program information pieces for displaying the full-program display region; and a recommended-program-display processing unit configured to display the program information pieces of the recommended programs stored in the recommended program storage unit in a recommended-program display region in alignment with the temporal axis of the full-program display region,
   the program-information displaying device characterized by comprising a start-up setting unit configured to enable start-up with a recommended program to be set on a basis of display of the recommended-program display region.
13. The program-information displaying device according to item 12, **characterized in that**, on a basis of the setting of start-up with the recommended program by the start-up setting unit, the program-information displaying device causes start-up with a last channel at the start-up, and later automatically switches to the recommended program.
14. The program-information displaying device according to item 13, **characterized in that** the program-information displaying device informs that the switching to the recommended program will be performed, at the time of displaying the last channel.
15. The program-information displaying device according to item 14, **characterized in that** the program-information displaying device further informs an operation method for cancelling the switching to the recommended program to keep the displaying of the last channel, at the time of displaying the last channel.
16. A television receiver comprising the program-information displaying device according to any one of items 1 to 15.
17. A program information displaying method characterized by comprising:
   a program-information-piece acquisition step of acquiring program information pieces;
   a full-program-display processing step of displaying the program information pieces, respectively, in a plurality of program cells in a full-program display region, the program cells being defined by a temporal axis and a channel axis crossing the temporal axis;
   a recommended-program-information selection step of selecting particular program information pieces from the program information pieces acquired by the program-information acquiring unit;
   a recommended-program storage step of storing therein program information pieces of selected recommended programs in a manner associable with the program information pieces for displaying the full-program display region; and
   a recommended-program-display processing step of displaying the program information pieces of the recommended programs stored in the recommended program storage step in a recommended-program display region in alignment with the temporal axis of the full-program display region.
18. A program information displaying method for displaying a full-program display and a recommended-program display as program information pieces, the method characterized by comprising the steps of:
   displaying a screen of a last channel;
   determining whether or not a setting for start-up with a recommended program is made;
   when the setting for start-up with a recommended program is made, acquiring a current time and displaying information indicating that a recommended-program information piece is being acquired; and
   acquiring channel information of a recommended program at the current time, selecting a recommended program on a basis of the channel information, and displaying the recommended program on the screen.
19. A program for causing a computer to execute the program information displaying method according to any one of items 17 and 18.
20. A computer-readable recording medium in which the program according to item 19 is recorded.

## Claims

1. A program-information displaying device including:
a program-information acquiring unit configured to acquire program information pieces; a full-program-display processing unit configured to respectively display the program information pieces in a plurality of program cells in a full-program display region, the program cells being defined by a temporal axis and a channel axis crossing the temporal axis; a recommended-program-information selecting unit configured to select particular program information pieces from the program information pieces acquired by the program-information acquiring unit; a recommended-program storage unit configured to store therein the program information pieces of selected recommended programs in a manner associable with the program information pieces for displaying the full-program display region; and a recommended-program-display processing unit configured to display the program information pieces of the recommended programs stored in the recommended program storage unit in a recommended-program display region in alignment with the temporal axis of the full-program display region,
the program-information displaying device **characterized by** comprising a start-up setting unit configured to enable start-up with a recommended program to be set on a basis of display of the recommended-program display region.

2. The program-information displaying device according to claim 1, **characterized in that**, on a basis of the setting of start-up with the recommended program by the start-up setting unit, the program-information displaying device causes start-up with a last channel at the start-up, and later automatically switches to the recommended program.

3. The program-information displaying device according to claim 2, **characterized in that** the program-information displaying device informs that the switching to the recommended program will be performed, at the time of displaying the last channel.

4. The program-information displaying device according to claim 3, **characterized in that** the program-information displaying device further informs an operation method for cancelling the switching to the recommended program to keep the displaying of the last channel, at the time of displaying the last channel.

5. A program information displaying method for displaying a full-program display and a recommended-program display as program information pieces, the method **characterized by** comprising the steps of:
displaying a screen of a last channel;
determining whether or not a setting for start-up with a recommended program is made;
when the setting for start-up with a recommended program is made, acquiring a current time and displaying information indicating that a recommended-program information piece is being acquired; and
acquiring channel information of a recommended program at the current time, selecting a recommended program on a basis of the channel information, and displaying the recommended program on the screen.

6. A program for causing a computer to execute the program information displaying method according to claim 5.

7. A computer-readable recording medium in which the program according to claim 5 is recorded.
